# FASCICULE DE BREVET EUROPEEN

(11) **EP 2 809 954 B1**
(45) Date de publication et mention de la délivrance du brevet: **06.04.2016**
(21) Numéro de dépôt: 13706582.7
(22) Date de dépôt: 28.01.2013
(51) Int. Cl.: F04D 29/32, F01D 5/00, F01D 5/06, F01D 5/30

(54) **PROCÉDÉ DE RÉPARATION DE MARQUES D'USURE SUR UN ROTOR PORTANT LA SOUFFLANTE D'UN TURBORÉACTEUR**
VERFAHREN ZUR REPARATUR VON VERSCHLEISSZONEN AUF EINEM DEN FAN EINES STRAHLTREIBWERKS TRAGENDEN ROTOR
METHOD OF REPAIR OF WEAR ZONES ON A ROTOR MOUNTING THE FAN OF A GAS TURBINE ENGINE

(30) Priorité: 31.01.2012 FR 1250887
(43) Date de publication de la demande: 10.12.2014
(73) Titulaire: SNECMA, 75015 Paris (FR)
(72) Inventeur: DELAPIERRE, Michaël, 77550 Moissy-cramayel Cedex (FR); GVOZDENOVIC, Eric, 77550 Moissy-cramayel Cedex (FR); PLANAS, Christian, 77550 Moissy-cramayel Cedex (FR); REGHEZZA, Patrick, 77550 Moissy-cramayel Cedex (FR)
(74) Mandataire: Gevers & Orès
(86) Numéro de dépôt international: PCT/FR2013/050177
(87) Numéro de publication internationale: WO 2013/114032

(56) Documents cités:
- FR-A1- 2 948 725

## Description

### Domaine de l'invention.

La présente invention concerne le domaine des moteurs à turbine à gaz et vise en particulier un turboréacteur à soufflante avant.

### Etat de la technique.

Le rotor de la soufflante d'un turboréacteur multi flux équipant les avions civils comprend un disque entraîné par l'arbre basse pression et à la périphérie duquel est retenue une pluralité d'aubes, s'étendant radialement par rapport à l'axe du moteur, par leur extrémité formant la section en queue d'aronde et celles-ci sont logées dans des alvéoles individuels usinés dans la jante du disque selon une direction sensiblement axiale. Immédiatement en aval du disque de soufflante et formant le même rotor, se trouve le compresseur de gavage. Celui-ci est en forme de tambour et comprend plusieurs étages d'aubes.

Selon une réalisation, le disque de soufflante est rendu solidaire du tambour du compresseur de gavage par boulonnage à une bride radiale formant la face amont de ce dernier. La bride est par ailleurs pourvue d'encoches formant un moyen de rétention axiale des aubes du disque de soufflante. A cet effet, chaque pied d'aube est pourvu, sur son côté aval, d'une extension axiale, que l'on désigne crochet, avec deux rainures latérales, radiales. Le crochet est engagé dans une encoche de la bride du compresseur de gavage, mentionnée ci-dessus, au niveau des rainures radiales de manière à être bloqué contre tout déplacement axial.

Lorsque le moteur est au sol, la soufflante peut être mise en autorotation par l'action du vent sur les aubes Fan. Ce phénomène provoque un débattement tangentiel des aubes Fan. La partie de l'aube formant l'échasse, entre le pied en queue d'aronde et la plateforme, vient alors frotter par son bord transversal aval contre la bride amont du tambour du compresseur de gavage. Ce déplacement génère ainsi un frottement conduisant à une usure qui a été constatée sur la face amont de la bride dans les zones situées dans le prolongement des alvéoles du disque de soufflante.

Au-delà d'une certaine profondeur ces usures peuvent avoir un impact d'une part sur la durée de vie des pièces et d'autre part sur leur tenue en cas de perte d'aube.

Un problème associé à ce phénomène d'usure vient de la présence, dans ces zones, de perçages réalisés pour décharger les contraintes mécaniques dans la bride. Ces trous dits de décharge sont généralement fermés par de simples bouchons en matière plastique. L'aube qui s'appuie sur la bride dans une zone avec perçage subit elle-même une érosion. L'usure de l'échasse n'est alors pas uniforme. La surface de la face aval de l'échasse ne s'use que dans la mesure où elle vient au contact de la bride ; la portion de surface qui est au droit du perçage ne s'use pas et devient proéminente à la longue. En plus de ce phénomène d'usure sur les aubes, il s'ensuit l'apparition de jeux entre les aubes et la bride.

Le présent déposant a proposé de disposer une butée élastique entre la bride et l'échasse de l'aube de manière à éviter ce contact. Une telle solution, décrite dans le document EP 1 873 401, ne résout cependant pas le cas où des marques d'usure sont présentes sur la bride.

Des solutions de réparation de la bride ont été proposées. Elles consistent d'abord en la suppression des zones usées, par la réalisation d'un lamage puis en la reconstitution de la surface de référence en vis-à-vis du pied de l'aube. Pour cette dernière opération on utilise des bouchons, dit bouchons anti-usure, montés serrés dans les trous de décharge du tambour.

Les bouchons anti-usure peuvent être en matériaux composites ou en métal. Les premiers présentent l'avantage de s'user beaucoup moins vite que les seconds. Ils sont également plus facilement démontables lorsqu'il est nécessaire de les changer. En revanche, ils n'assurent pas une tenue mécanique suffisante lors du montage des aubes. Pour cette raison, les bouchons anti-usure sont généralement métalliques mais avec un risque de détérioration du tambour lors des opérations de montage et de démontage nécessaires pour contrôler la santé matière des trous de décharge du tambour de compresseur de gavage.

Les inconvénients sont plus précisément les suivants.

Il existe un risque de génération de défauts lors de la mise en place des bouchons.

La mise en place des bouchons est une opération délicate car il faut assurer un ajustement glissant du bouchon dans l'orifice avec un frettage minimal à respecter pour en garantir le maintien dans son logement en fonctionnement. On réalise celle-ci par un chauffage du tambour associé à un refroidissement du bouchon. Un écart important de température est nécessaire, supérieur à 300°C.

La réparation est coûteuse : autant de lamages à usiner que d'aubes fan et autant d'opérations de montage.

La réparation doit être effectuée dans un atelier spécialisé ce qui implique une immobilisation de la pièce, voire du moteur.

Il faut réaléser le perçage dans le tambour pour chaque démontage ; cela limite le nombre de remplacements possibles pendant la durée de vie du tambour.

Pour remédier au moins en partie à ces inconvénients, la demanderesse a proposé des améliorations facilitant le montage des bouchons ; par exemple dans la demande de brevet FR 2 929 660 le bouchon est en deux parties, une partie métallique du côté amont recevant les contraintes de frottement et une partie en matériau plastique côté aval facilitant les opérations de montage et de démontage. Dans la demande de brevet FR 2 948 725, le bouchon est agencé de manière à pouvoir être monté et démonté du seul côté amont du tambour.

Dans la demande FR 10 60 087, il est proposé de rapporter et interposer une cale annulaire entre le disque et la bride, formant une surface d'appui axial contre laquelle les aubes logées dans les alvéoles sont susceptibles de venir prendre appui. Cette solution simplifie la réparation des rotors lorsque l'on constate la présence de marques d'usure provenant du frottement des pieds des aubes. Il suffit de remplacer la cale annulaire. Cette cale forme en plus un moyen de fermeture des trous de décharge. Il n'est ainsi pas nécessaire de prévoir des bouchons pour ces derniers. Une gorge annulaire est éventuellement usinée dans la bride pour loger la cale. Cette solution est adaptée à la réparation d'un rotor ne présentant pas initialement de cale annulaire, On usine une gorge annulaire de profondeur suffisante pour éliminer les parties affaiblies de la pièce et on met en place une cale annulaire. De cette façon, on élimine les causes d'usure de l'anneau et on retrouve la surface de référence entre le disque et l'anneau.

La demanderesse s'est fixé comme objectif la mise au point d'une autre méthode de réparation. L'objectif est de réaliser une réparation fiable jusqu'à la fin de vie de la pièce. Il est également de réduire les coûts de maintenance en flotte, le coût de réparation doit être inférieur à celui de remplacement par une pièce neuve. Il est aussi de supprimer les usures sur la face avant de la bride sans changer la position axiale de l'aube en vis-à-vis.

### Exposé de l'invention.

On parvient à ces objectifs en réalisant un lamage optimisé des zones présentant un marquage d'usure.

Plus précisément et conformément à l'invention, le procédé porte sur la réparation d'une bride d'un rotor sur la face transversale de laquelle est fixé un disque de soufflante dans un moteur à turbosoufflante amont, la bride comportant, disposés en couronne, des orifices de liaison au disque et des orifices intercalaires dits de décharge, des marques d'usure étant formées par le frottement des aubes de soufflante sur la bride.

Le procédé, comprenant une étape d'usinage de lamages sur la bride dans les zones avec marques d'usure et de mise en place de pions dit anti-usure dans les orifices de décharge susceptibles d'être recouverts par les aubes lors des frottements, est caractérisé par le fait que les lamages s'étendent entre les orifices de liaison, et sont limités circonférentiellement par les zones ou surfaces de serrage de la liaison entre le disque et la bride.

Par cette caractéristique, on ne remet pas en cause les conditions de serrage entre le disque de soufflante et la bride.

Conformément à une autre caractéristique, chaque lamage entre deux orifices de liaison étant défini par deux bordures orientées radialement, au moins l'une des bordures est en dehors des trous de décharge. En évitant que les bordures du lamage ne traversent les trous de décharge, on réduit le risque de créer des zones de concentration de contraintes initiatrices de criques.

Avantageusement, on détermine la profondeur du lamage de manière à obtenir à la fois un rayon de fond de lamage le long desdites bordures suffisant pour éviter les concentrations de contraintes le long desdites bordures tout en limitant la diminution de la section travaillante.

Plus particulièrement, dans le mesure où la bride comprend des encoches radiales de réception de crochets axiaux des aubes, les bordures radiales s'étendent radialement jusqu'au fond des encoches. Cette solution permet de ne pas affaiblir la pièce en cas de rupture d'aube. En effet la perte d'une aube induit des efforts tendant à déformer la bride au niveau des encoches.

Le fond de l'encoche présentant un chanfrein, on améliore encore la résistance à la déformation de la bride en cas de perte d'aube, en limitant la profondeur du lamage de telle manière que la profondeur de celui-ci soit inférieure à celle du chanfrein.

Conformément à une autre caractéristique, on dispose par montage glissant, un pion anti-usure avec fut et collerette dans l'orifice de décharge susceptible d'être recouvert par une aube de soufflante, le pion étant métallique. Le montage glissant a pour but de réduire le risque d'endommagement de la bride. En effet un pion métallique offre une meilleure résistance aux efforts et aux chocs tels que ceux appliqués sur la collerette lors du montage des aubes. En outre le montage glissant étant associé à un espace suffisant autour du fut du pion pendant le montage, on limite les risques de choc et de réalisation de rainures initiatrices de criques.

Avantageusement, le montage glissant est réalisé par frettage du fut du pion dans l'orifice de décharge. Dans ce cas, la surface de bride ayant été grenaillée, le chauffage de la bride a été ajusté en température et en temps pour ne pas entraîner une relaxation des contraintes résiduelles.

Conformément à une autre solution évitant les risques d'endommagement de la bride, le fut du pion étant déformable radialement, un bouchon d'extension radiale du fut est disposé du côté opposé à la collerette. Alternativement, le fut du pion étant déformable radialement, on pince le fut pour permettre son introduction dans l'orifice puis on relâche le pincement.

### Brève description des figures.

D'autres caractéristiques et avantages ressortiront de la description qui suit de modes de réalisation de l'invention, non limitatifs, en référence aux dessins annexés sur lesquels :
- La figure 1 représente, vu en coupe axiale, un turboréacteur auquel s'applique l'invention ;
- La figure 2 montre en perspective le détail d'un rotor de soufflante de turboréacteur du côté de la bride amont du compresseur de gavage ;
- La figure 3 montre en perspective la bride amont du tambour du compresseur avec des zones de lamage.
- La figure 4 montre la bride de face et en coupe au travers du pion anti-usure montée dans un trou de décharge ;
- La figure 5 montre une variante de réalisation du montage des pions anti-usure avec et sans élément mâle de verrouillage.

### Description détaillée de modes de réalisation de l'invention.

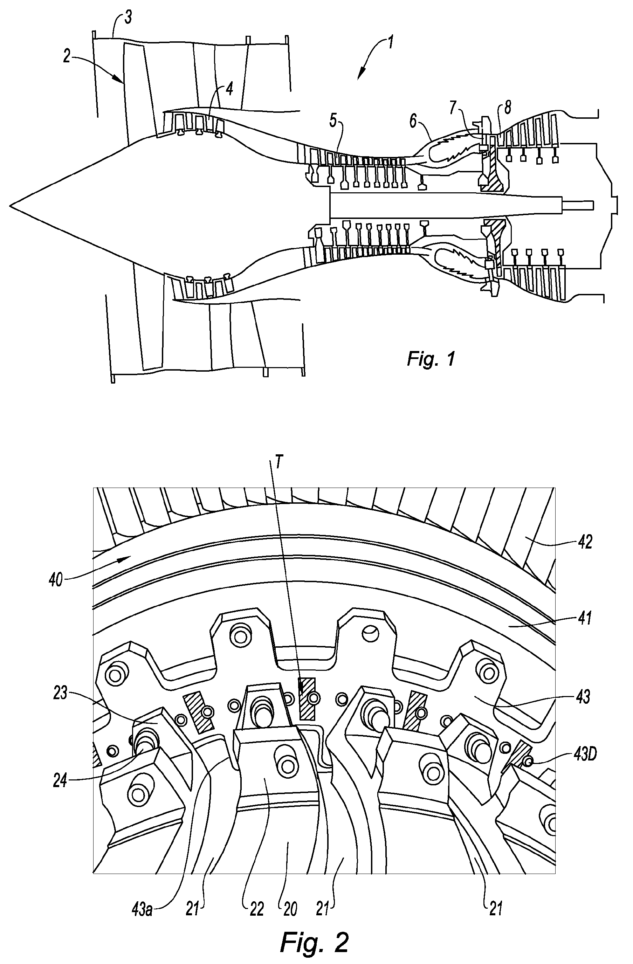

On a représenté sur la figure 1 un turboréacteur 1, en coupe axiale, à double flux et à double corps. Il comprend, à l'amont, une soufflante avant 2 avec un rotor caréné dans un carter de soufflante 3 qui délimite la veine de flux secondaire. Le rotor 2 de la soufflante est solidaire d'un compresseur à basse pression 4, désigné encore compresseur de gavage. L'ensemble de la soufflante 2 et du compresseur de gavage est solidaire par l'intermédiaire d'un arbre central, d'un ensemble de turbine en aval formant la turbine basse pression 8.

En aval du compresseur de gavage 4, l'air est encore comprimé par le compresseur à haute pression 5. Ce dernier est solidaire en rotation de l'étage de turbine à haute pression 7 par lequel il est entraîné. L'air comprimé entre dans la chambre de combustion 6 qui produit les gaz chauds pour entraîner les étages de turbine.

L'invention concerne, dans cet exemple, la partie du moteur située entre le rotor 2 de soufflante et le rotor 4 du compresseur à basse pression.

On a représenté sur la figure 2, en perspective et vu depuis l'amont, l'intérieur de cette zone dans laquelle on a omis, pour plus de clarté, les aubes de soufflante.

Le disque 20 de soufflante comprend des alvéoles 21 sur sa jante. Ceux-ci sont orientés globalement axialement, c'est-à-dire dans l'axe du moteur, avec ici une forme curviligne. Les alvéoles sont à section transversale en queue d'aronde pour retenir les aubes radialement. La jante comprend des brides radiales transversales 22 entre les alvéoles pour la fixation de plateformes inter-aubes non représentées. Le disque 20 est solidaire du compresseur à basse pression 40 dit de gavage, situé en aval. Le compresseur 40 comprend un tambour 41 cylindrique sur lequel sont fixées les aubes de compresseur 42 que l'on voit en partie. À l'amont, le tambour est solidaire d'une bride transversale radiale 43, formant un anneau et sur laquelle la jante du disque 20 est boulonnée. La jante comprend des brides de fixation radiales 23 entre les alvéoles 21. Chaque bride radiale 23 est fixée par un boulon 24 à la bride amont 43 du compresseur. On note que les trous présents sur la bride amont 43 du tambour du compresseur n'ont pas tous la même fonction ; des trous de liaison 43F permettent d'assurer la liaison par boulonnage du disque au tambour et des trous de décharge 43D protègent les trous de liaison du flux de contraintes circonférentiel. Les boulons 24 sont logés dans les trous de liaison 43F. Les trous de liaison 43F ont un diamètre légèrement supérieur à celui des trous de décharge 43D. Trois trous de décharges sont ici prévus entre deux trous de liaison. Ils sont disposés sur une même couronne circulaire. Des bouchons d'étanchéité non représentés obturent les orifices 43D et évitent que l'air à l'aval, à l'intérieur de la cavité du tambour, ne fuie par les perçages vers l'amont dont la pression est inférieure. Ces bouchons d'étanchéité sont en matière synthétique et n'assurent aucune autre fonction.

La bride amont 43 présente des encoches de rétention 43a avec des bords radiaux et qui sont ouvertes vers l'axe de la machine. Ces encoches servent à retenir axialement les aubes par introduction du crochet de ces dernières qui sont logées dans les alvéoles 21 situés en vis-à-vis. Ce mode de retenue des aubes est décrit dans le brevet au nom de la demanderesse EP 165 860.

Lorsque le moteur est au sol, la mise en autorotation de la soufflante provoque un débattement tangentiel des aubes Fan. Dans un tel cas, les aubes viennent frotter contre la bride 43 par la face aval de leur échasse. La pression et les déplacements des aubes entraînent une usure à la fois de l'aube et de la bride amont. On a indiqué sur ce rotor la disposition des marques T d'usure laissées par les échasses des aubes sur la bride 43. Ces marquent reproduisent la forme de la section des échasses des aubes ; elle est de forme rectangulaire. Elles sont situées dans le prolongement des alvéoles dans lesquelles les aubes sont logées et chevauchent notamment des trous de décharge 43D.

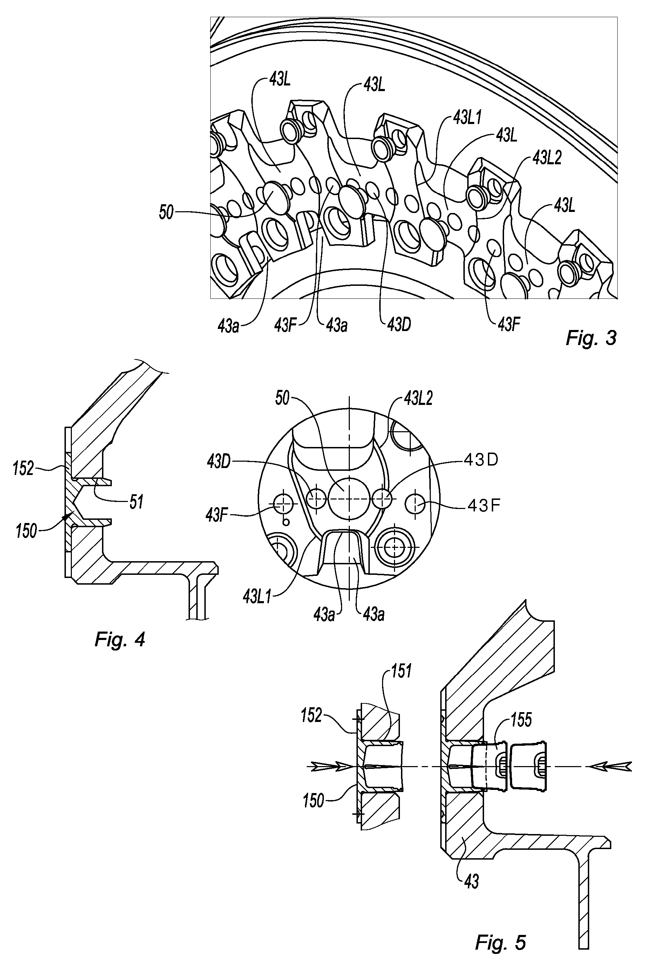

On décrit maintenant le procédé de réparation de l'invention. On usine conformément à celle-ci un lamage optimisé 43L dans la zone de chaque marque d'usure T, voir figure 4. Ce lamage 43L se définit par son étendue circonférentielle entre deux bordures radiales 43L1 et 43L2, son étendue radiale et sa profondeur. Lorsque les lamages ont été réalisés, la surface de la bride 43 est reconstituée par la mise en place de pions anti-usure 50 dans les orifices de décharge 43D en vis-à-vis des alvéoles du disque 20. Ces pions anti-usure présentent un fut 51 venant se loger dans le trou correspondant et une collerette 52 en appui sur le fond du lamage 43L.

Afin de ne pas remettre en cause les conditions de serrage des brides 23 du disque 20 sur la bride 43 du tambour par les boulons 24, l'étendue circonférentielle des lamages est limitée. En particulier les zones de contact par lesquelles les brides 23 du disque 20 sont serrées sur la bride du tambour ne sont pas usinées.

Par ailleurs, l'optimisation du lamage vise à ne pas diminuer la durée de vie de la pièce. Dans ce but, on fait en sorte qu'au moins l'une des bordures 43L1 ou 43L2 passe entre deux trous de décharge 43D adjacents. De ce fait, on réduit globalement le risque d'apparition de criques à l'intersection des bordures avec les trous de décharge.

Dans le but également de ne pas réduire la durée de vie de la pièce, on établit un compromis entre la profondeur du lamage nécessaire pour que le rayon de raccordement le long des bordures et la diminution de la section travaillante radiale et circonférentielle.

L'optimisation du lamage prend encore en considération la tenue de la pièce aux sollicitations résultant de la perte d'une aube. En cas de perte d'une aube, les zones situées de part et d'autre des encoches assurent la rétention axiale des aubes et participe directement à la souplesse du système de rétention aval. L'étendue du lamage est donc limitée radialement de manière à minimiser son impact sur la souplesse axiale du système de rétention aval des aubes de soufflante. Les bords radiaux de l'encoche 43a ne sont ainsi pas usinés, leur épaisseur n'est pas modifiée.

Concernant le fond de l'encoche, afin d'éviter une diminution de la surface de contact entre le crochet de l'aube et le fond de l'encoche, la profondeur du lamage est limitée à celle du chanfrein existant à l'intersection entre le lamage et le fond 43af de l'encoche

Concernant la profondeur du lamage, il est suffisamment profond pour supprimer la totalité des marques d'usure constatées au niveau des talons des aubes.

Concernant les pions anti-usure 50 rapportés dans le trou de décharge 43D en vis-à-vis des alvéoles du disque, on prend en compte les considérations suivantes :
Maximiser l'épaisseur de la collerette pour garantir la tenue mécanique de la collerette lors du montage et en fonctionnement.

Choix d'un matériau métallique qui permet de résister aux sollicitations de montage et qui présente un bon comportement à l'usure. Il est apparu qu'un alliage à base Ni, tel que l'Inconel 718 satisfaisait à cette contrainte.

Montage glissant des pions 50 dans les orifices 43D de manière à ne pas risquer d'endommager ou rayer la bride en alliage de titane.

Un montage glissant convenant à cette condition est le frettage. Il comprend un refroidissement du pion à l'azote liquide combiné à un chauffage de la pièce à température limitée de manière à ne pas relaxer les contraintes résiduelles de grenaillage dans les couches superficielles. Un frettage avantageux comprend le refroidissement du pion en Inconel 718 à l'azote liquide à -196°C combiné à un chauffage de la pièce en alliage de titane, tel que le TA6V, entre 250°C et 350°C pendant une heure.

Des essais de faisabilité du montage ont été réalisés sur 160 trous. Aucun endommagement du tambour n'a été constaté lors du montage des pions anti-usure.

Des solutions alternatives au frettage du pion avec des risques faibles d'endommagement du tambour et sans mise en place dans l'orifice de décharge impliquant le chauffage de la pièce, sont envisageables.

Dans la figure 5, par exemple, on a représenté une solution de montage d'un pion 150 avec fut 151 et collerette 152 qui comprend un élément mâle 155 que l'on dispose dans le fut par introduction du côté opposé à la collerette. Le fut est fendu longitudinalement de manière à permettre son extension radiale. Une fois en place dans le trou l'élément mâle, légèrement tronconique, est guidé axialement dans le fut ce qui induit des efforts radiaux sur les parois du fut du pion. Le guidage peut être obtenu par vissage ou bien par introduction à force.

Selon un autre mode de réalisation le fut du pion peut être fendu et avoir une forme légèrement évasée. Le pion est mis en place par rétreint des bords fendus du fut au moyen d'un outil adapté.

## Revendications

1. Procédé de réparation d'une bride (43) d'un rotor sur la face transversale de laquelle est fixé un disque (20) de soufflante dans un moteur à turbosoufflante amont, la bride comportant en forme de couronne des orifices de liaison (43F) au disque (20) et des orifices (43D) intercalaires dits de décharge, des marques d'usure (T) étant formées par le frottement des aubes de soufflante sur la bride, le procédé comprenant une étape d'usinage de lamages (43L) sur la bride dans les zones avec marques d'usure et de mise en place de pions (50, 150) dit anti-usure dans les orifices de décharge (43D) susceptibles d'être recouverts par les aubes lors des frottements, **caractérisé par le fait que** les lamages (43L) s'étendent entre les orifices de liaison (43F), et sont limités circonférentiellement par les surfaces de serrage de la liaison entre le disque et la bride.

2. Procédé selon la revendication précédente, chaque lamage entre deux orifices de liaison étant défini par deux bordures (43L1, 43L2) orientées radialement, au moins l'une des bordures est en dehors des trous de décharge.

3. Procédé selon la revendication précédente selon lequel on détermine la profondeur du lamage (43L) de manière à obtenir à la fois un rayon de fond de lamage le long desdites bordures 43L1, 43L2) suffisant pour éviter les concentrations de contraintes le long desdites bordures tout en limitant la diminution de la section travaillante de la bride dans la zone de lamage.

4. Procédé selon l'une des revendications 2 et 3, la bride comprenant des encoches (43a), radiales de réception de crochets axiaux des aubes, selon lequel les bordures radiales s'étendent radialement jusqu'au fond des encoches

5. Procédé selon la revendication précédente, le fond des encoches présentant un chanfrein, selon lequel on limite la profondeur du lamage de telle manière qu'elle soit inférieure à celle du chanfrein.

6. Procédé selon l'une des revendications précédentes, selon lequel on dispose par montage glissant, un pion anti-usure avec fut et collerette dans l'orifice de décharge susceptible d'être recouvert par une aube de soufflante, le pion étant métallique.

7. Procédé selon la revendication précédente selon lequel le montage glissant est réalisé par frettage du fut du pion dans l'orifice de décharge.

8. Procédé selon la revendication précédente, la surface de bride ayant été grenaillée, le chauffage de la bride est effectué pendant une durée et jusqu'à une température déterminées de manière à ce qu'il n'entraîne pas de relaxation des contraintes résiduelles de grenaillage.

9. Procédé selon la revendication 1, le fut du pion (150) étant déformable radialement, un bouchon d'extension radiale du fut est disposé du côté opposé à la collerette.

10. procédé selon la revendication 1 Le fut du pion étant déformable radialement, on pince le fut pour permettre son introduction dans l'orifice puis on relâche le pincement.

## Patentansprüche

1. Verfahren zur Reparatur eines Flansches (43) eines Rotors auf dessen Querseite eine Gebläsescheibe (20) in einem vorgelagerten Mantelstrommotor befestigt ist, wobei der Flansch in Form einer Krone Öffnungen zur Verbindung (43F) mit der Scheibe (20) und eingefügte Öffnungen (43D), genannt zum Austritt, umfasst, wobei Abnutzungsmarken (T) durch die Reibung der Gebläseschaufeln auf dem Flansch gebildet sind, wobei das Verfahren einen Schritt des Bearbeitens von Senkungen (43L) auf dem Flansch in den Bereichen mit Abnutzungsmarken und des Anbringens von Stiften (50, 150) gegen die Abnutzung, in den Öffnungen zum Austritt (43D) umfasst, die von den Schaufeln bei den Reibungen abgedeckt werden können, **dadurch gekennzeichnet, dass** sich die Senkungen (43L) zwischen den Öffnungen zur Verbindung (43F) erstrecken und auf dem Umfang von den Klemmflächen der Verbindung zwischen der Scheibe und dem Flansch erstrecken.

2. Verfahren nach dem vorhergehenden Anspruch, wobei jede Senkung zwischen zwei Öffnungen zur Verbindung durch zwei Umrandungen (43L1, 43L2) definiert ist, die radial ausgerichtet sind, wobei sich mindestens eine der Umrandungen außerhalb der Austrittslöcher befindet.

3. Verfahren nach dem vorhergehenden Anspruch, wobei die Tiefe der Senkung (43L) bestimmt wird, um gleichzeitig einen Grundradius der Senkung entlang der Umrandungen (43L1, 43L2) zu erhalten, der ausreichend ist, um die Konzentrationen von Spannungen entlang der Umrandungen zu vermeiden und gleichzeitig die Verringerung des Arbeitsabschnitts des Flansches im Bereich der Vertiefung zu begrenzen.

4. Verfahren nach einem der Ansprüche 2 und 3, wobei der Flansch radiale Einschnitte (43a) zur Aufnahme von axialen Haken der Schaufeln umfasst, wobei sich die radialen Umrandungen radial bis zum Boden der Einschnitte erstrecken.

5. Verfahren nach dem vorhergehenden Anspruch, wobei der Boden der Einschnitte eine Fase aufweist, wobei die Tiefe der Senkung derart begrenzt wird, dass sie geringer als diejenige der Fase ist.

6. Verfahren nach einem der vorhergehenden Ansprüche, wobei durch gleitende Montage ein Stift gegen die Abnutzung mit Schaft und Muffe in die Öffnung zum Austritt angebracht wird, die durch eine Gebläseschaufel abgedeckt werden kann, wobei der Stift aus Metall ist.

7. Verfahren nach dem vorhergehenden Anspruch, wobei die gleitende Montage durch Schrumpfung des Schafts des Stifts in die Austrittsöffnung durchgeführt wird.

8. Verfahren nach dem vorhergehenden Anspruch, wobei die Oberfläche des Flansches abgestrahlt wurde, wobei die Erhitzung des Flansches während einer Dauer und bis zu einer Temperatur durchgeführt wird, die so festgelegt werden, dass es zu keiner Verringerung der restlichen Spannungen der Abstrahlung kommt.

9. Verfahren nach Anspruch 1, wobei, da der Schaft des Stifts (150) radial verformt werden kann, ein radialer Erweiterungsstopfen des Schafts auf der Seite angebracht wird, die der Muffe gegenüber liegt.

10. Verfahren nach Anspruch 1, wobei, da der Schaft des Stiftes radial verformt werden kann, der Stift eingeklemmt wird, um seine Einführung in die Öffnung zu ermöglichen, dann die Einklemmung gelöst wird.

## Claims

1. A method for repairing a flange (43) of a rotor on the transverse face of which there is attached a disk (20) of a fan in an engine having an upstream turbofan, the flange comprising, in a ring shape, openings (43F) for connecting to the disk (20) and, between these, openings (43D) termed stress-relief openings, wear marks (T) being formed by the fan blades rubbing on the flange, the method comprising a step of machining spot faces (43L) on the flange in the regions having wear marks and a step of putting in place pegs (50, 150), known as anti-wear pegs, in the stress-relief openings (43D) which are likely to be covered by the blades during rubbing, **characterized in that** the spot faces (43L) extend between the connection openings (43F) and are limited in the circumferential direction by the clamping surfaces of the connection between the disk and the flange.

2. The method as claimed in the preceding claim, each spot face between two connection openings being defined by two radially oriented borders (43L1, 43L2), at least one of the borders is outside the stress-relief holes.

3. The method as claimed in the preceding claim, according to which the depth of the spot face (43L) is determined so as to obtain a sufficient spot facing base radius along said borders (43L1, 43L2) in order to avoid stress concentrations along said borders while limiting the reduction in the effective cross section of the flange in the spot facing region.

4. The method as claimed in either of claims 2 and 3, the flange comprising radial scallops (43a) for receiving axial hooks of the blades, according to which the radial borders extend radially as far as the base of the scallops.

5. The method as claimed in the preceding claim, the base of the scallops having a chamfer, according to which the depth of the spot face is limited such that it is less than that of the chamfer.

6. The method as claimed in one of the preceding claims, according to which an anti-wear peg, having a stem and a collar, is arranged by sliding assembly in the stress-relief opening which may be covered by a fan blade, the peg being made of metal.

7. The method as claimed in the preceding claim, according to which the sliding assembly is created by shrink-fitting the stem of the peg in the stress-relief opening.

8. The method as claimed in the preceding claim, the flange surface having undergone shot peening, the heating of the flange is carried out for a predetermined period and up to a predetermined temperature such that it does not relieve the residual stresses from the shot peening.

9. The method as claimed in claim 1, the stem of the peg (150) being deformable in the radial direction, a plug for radially stretching the stem is arranged on the side opposite the collar.

10. The method as claimed in claim 1, the stem of the peg being deformable in the radial direction, the stem is pinched such that it can be inserted into the opening, after which the pinching is released.
